# EUROPEAN PATENT APPLICATION

(11) **EP 4 726 583 A1**
(43) Date of publication of application: **15.04.2026**
(21) Application number: 25207374.7
(22) Date of filing: 07.10.2025
(51) Int. Cl.: G06F 21/44, H04L 9/32, H02J 7/47, H01M 10/42

(54) **MUTUAL AUTHENTICATION FOR HOST CONTROLLER AND BATTERY**

(30) Priority: 10.10.2024 US 202463705977 P; 12.12.2024 US 202418979312
(71) Applicant: Microsoft Technology Licensing, LLC, Redmond, WA 98052-6399 (US)
(72) Inventor: WILHELMI, Ceceli Ann, Redmond, 98052-6399 (US); PUTNAM, Eric Jason, Redmond, 98052-6399 (US); YOUNG, Robert D, Redmond, 98052-6399 (US); THIRUGNANAM, Seran, Redmond, 98052-6399 (US)
(74) Representative: Murgitroyd & Company

(57) **Abstract**

A method for mutual authentication between a host controller and a battery subsystem of an electronic device includes, at a battery controller, generating a battery-side authentication challenge, and transmitting the battery-side authentication challenge to the host controller. A host-side authentication challenge is received from the host controller. The host-side authentication challenge is signed with a private encryption key of the battery controller to generate a battery-side message digest. The battery-side message digest and a public encryption key of the battery controller are transmitted to the host controller as a battery-side signature pair. A host-side signature pair is received from the host controller. Based at least in part on the host-side signature pair, a battery-side validation result is output that specifies a battery-side validity state for the host controller.

## Description

### CROSS REFERENCE TO RELATED APPLICATIONS

This application claims priority to U.S. Provisional Patent Application Ser. No. 63/705,977, filed October 10, 2024, and to US 18/979,312 filed December 12, 2024 the entirety of which is hereby incorporated herein by reference for all purposes.

### BACKGROUND

Cryptographic authentication methods can be used in electronic systems to enable one entity to verify the authenticity of, and establish secure communications with, another entity. For instance, asymmetric key cryptography is an encryption technique that uses a mathematically related pair of keys. This includes a public key, which can be shared openly to encrypt data or verify signatures, and a private key, which is kept confidential to decrypt data or create signatures.

### SUMMARY

The scope of the invention is in accordance with the appended claims. This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

A method for mutual authentication between a host controller and a battery subsystem of an electronic device includes, at a battery controller, generating a battery-side authentication challenge, and transmitting the battery-side authentication challenge to the host controller. A host-side authentication challenge is received from the host controller. The host-side authentication challenge is signed with a private encryption key of the battery controller to generate a battery-side message digest. The battery-side message digest and a public encryption key of the battery controller are transmitted to the host controller as a battery-side signature pair. A host-side signature pair is received from the host controller. Based at least in part on the host-side signature pair, a battery-side validation result is output that specifies a battery-side validity state for the host controller.

### BRIEF DESCRIPTION OF THE DRAWINGS

FIG. 1 schematically depicts exchange of data between a host controller and a battery subsystem of an electronic device.
FIG. 2 illustrates an example method for mutual device authentication.
FIGS. 3A-3C schematically illustrate exchange of data between a host controller and a battery subsystem during mutual device authentication.
FIG. 4 illustrates an example cryptographic authentication process.
FIG. 5 schematically shows an example computing system.

### DETAILED DESCRIPTION

As electronic devices become more repairable, it becomes increasingly important to ensure the authenticity of the device's various components. This is particularly true with respect to battery packs, as using battery cells with different voltage, power, and/or capacity ratings can lead to degraded performance and significant safety concerns, such as thermal runaway. Furthermore, there are limited safeguards in place to ensure the battery pack is receiving its configuration from an authentic host microcontroller (MCU), also referred to as a "host controller" in the present disclosure. Host controllers send configuration data to the battery, such as the charging voltage and current, thereby affecting the battery's performance. An inauthentic host controller can be used to send invalid configuration data to the battery. For instance, unauthorized third parties may acquire old, degraded, or otherwise unsuitable batteries, reconfigure the batteries using inauthentic host controllers, and then re-sell the batteries as "new." This can present safety concerns as consumers unknowingly use degraded battery cells. Thus, the security and safety of the electronic device can be approved by preventing inauthentic host controllers from making configuration changes to the device's batteries.

Accordingly, the present disclosure is directed to techniques for mutual device authentication, enabling both a host controller and a battery subsystem to determine that they are connected to, and communicating with, an authorized counterpart. As will be described in more detail below, the host controller and the battery subsystem exchange challenges. Each of these two components (the host controller and battery subsystem) applies cryptographic operations to the challenge that it receives from its counterpart. This may include, for instance, signing the received challenge with a private encryption key, to generate a message digest. Each component attaches its own public key to the message digest and sends the result to its counterpart. The two components then cryptographically validate the message digests they receive in order to confirm that their counterparts are authentic - e.g., the host controller confirms that it is connected to an authorized battery, and the battery confirms that it is connected to an authorized host controller.

In this manner, the techniques described herein beneficially improve the security and performance of electronic devices in which they are applied. For instance, through the use of the mutual authentication techniques described herein, consumers and manufacturers can have greater confidence that their device's batteries have not been tampered with in unsafe or unreliable ways. Furthermore, the host and/or battery controllers may change aspects of their behavior depending on the result of the mutual authentication process. For instance, a host controller may apply a more conservative configuration profile upon determining that it is attached to an inauthentic battery, thereby improving device safety, and a battery subsystem may reject configuration changes from an inauthentic host, thereby preserving the battery's integrity. Furthermore, the mutual authentication techniques discussed herein beneficially consume relatively little computational resources (e.g., processing cycles) when implemented, thereby improving security and performance while conserving computational resources of the electronic device.

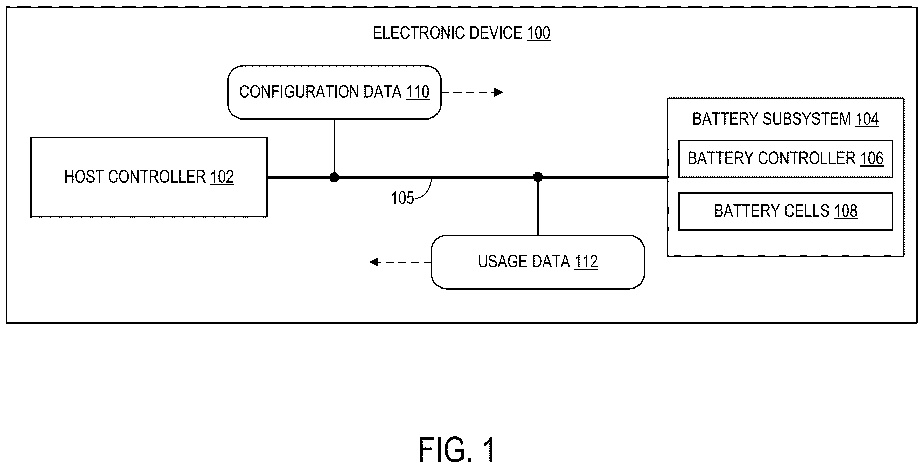

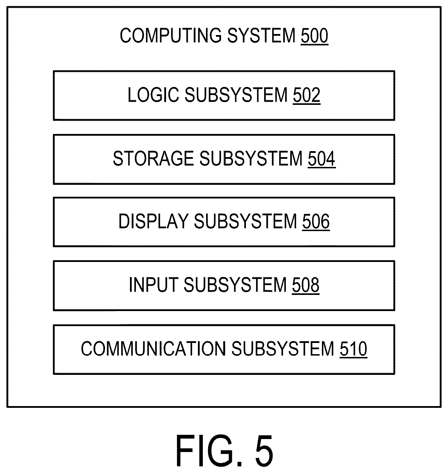

FIG. 1 schematically shows an example electronic device 100, which includes a host controller 102 and a battery subsystem 104. The electronic device may have any suitable capabilities, hardware configuration, and form factor. As non-limiting examples, the electronic device may be a laptop computer, smartphone, drone, vehicle (e.g., autonomous car, e-bike, scooter), power tool, smartwatch, display device (e.g., head-mounted display), sensor device, input device, and/or any other suitable electronic device that includes an integrated battery. In some examples, electronic device 100 may be implemented as computing system 500 described below with respect to FIG. 5.

The battery subsystem includes a battery controller 106 and a plurality of battery cells 108. The battery controller may take the form of any suitable computer logic hardware integrated into the battery subsystem that directly controls the physical hardware of the battery. For instance, the battery controller may control the charging voltage and/or current to ensure that the battery is charged safely and efficiently, the controller may monitor the battery's state-of-charge (e.g., the remaining battery capacity), the controller may maintain information relating to the battery's age and/or usage history (e.g., total number of charging cycles), the controller may perform cell balancing to ensure that each of the battery cells are charged evenly, the battery controller may implement safety protections (e.g., permanent failure protection, fusing) and/or perform any other suitable functions related to the operation of the battery subsystem. Similarly, the battery subsystem may include any suitable number and variety of battery cells 108, which may use any suitable underlying technology (e.g., battery chemistry) for storing and discharging electrical energy.

As shown, data is exchanged between the host controller 102 and the battery subsystem 104 over a data bus 105. In this example, this includes configuration data 110 and usage data 112. The configuration data may include, for instance, instructions for the battery controller to change the behavior of the battery, and/or change data stored by the battery. In some scenarios, as batteries age, the host controller may periodically reduce the battery's charging voltage to improve battery performance and mitigate potential safety risks. Thus, as one example, configuration data 110 may include instructions for the battery controller 106 to reduce the battery's charging voltage. It will be understood that the configuration data may include instructions affecting any suitable aspect of the battery's performance.

Similarly, the host controller may read any suitable usage data 112 pertaining to the battery's current state and/or usage over time. For instance, the usage data may include aging-related information stored by the battery (e.g., total number of charge cycles, estimated remaining lifespan), the current charging voltage, the battery's total remaining capacity, etc.

As discussed above, problems can arise when either a host controller or a battery subsystem are used with unauthorized counterparts. For instance, an unauthorized host controller could be used to change the configuration of the battery in a way that negatively affects safety, such as by setting unsafe charging voltages for a relatively old or degraded battery pack. In extreme cases, the unauthorized host controller could remove voltage, current, and temperature settings entirely. This can contribute to a significantly shortened battery lifespan, and/or create safety hazards such as thermal runaway.

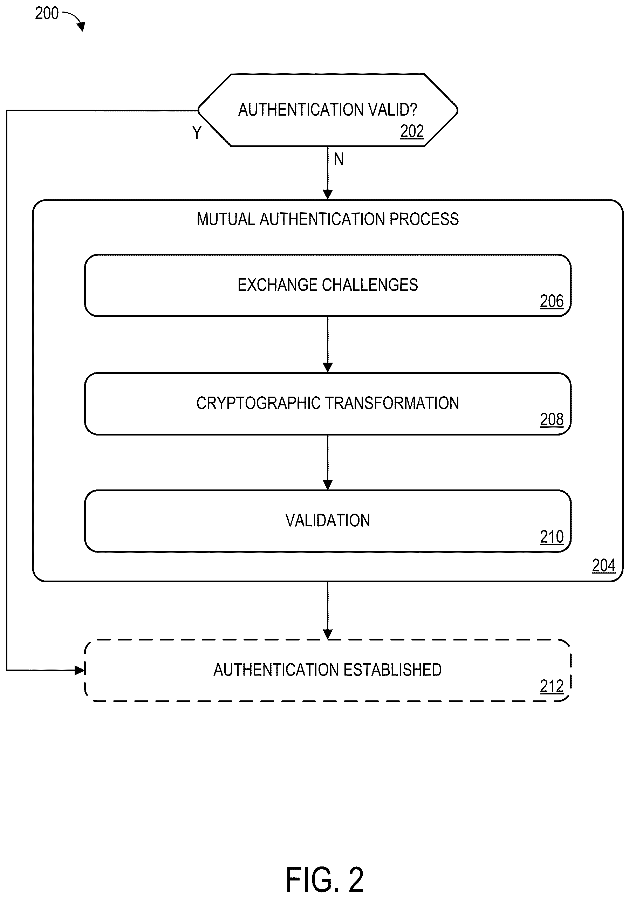

Accordingly, FIG. 2 illustrates an example method 200 for mutual device authentication between a host controller and a battery subsystem. Steps of method 200 may be initiated, terminated, and/or repeated at any suitable time and in response to any suitable condition. Method 200 may be implemented with respect to any suitable electronic device, such as computing system 500 described below with respect to FIG. 5.

Method 200 may be performed with any suitable frequency. In some examples, the mutual authentication process may be performed any time the host controller attempts to change the configuration of the battery. Depending on the implementation, this may take place as often as once every few seconds, or as rarely as one (or fewer) times per year.

At 202, method 200 includes determining whether there is an existing valid authentication between the host controller and battery subsystem. In some scenarios, after establishing a mutual authentication according to the techniques discussed herein, that authentication may remain valid until it expires. Then, at a later time, the authentication process may be repeated to re-establish the authenticity of the host controller and battery subsystem. In other words, at a subsequent time, the electronic device may re-establish mutual authentication between the host controller and the battery subsystem in response to a reauthentication condition. The reauthentication condition may include, as non-limiting examples, a detected hardware change, an elapsed authentication time limit, a device power cycle, etc. If it is determined that the host controller and the battery subsystem have already been mutually authenticated (Yes at 202), then method 202 may bypass the mutual authentication process. Otherwise, (No at 202), method 200 proceeds to the mutual authentication process 204. Use of such a reauthentication process may beneficially be used to detect cases where unauthorized hardware changes have been made since the last time the authentication process was performed, thereby improving the security and safety of the electronic device.

The mutual authentication process begins with a challenge exchange phase at 206. In this phase, the host controller generates and transmits a host-side authentication challenge to the battery controller. Similarly, the battery controller generates and transmits a battery-side authentication challenge to the host controller. These may be exchanged via any suitable communications interface between the host controller and data controller - e.g., such as a data bus as is the case in FIG. 1.

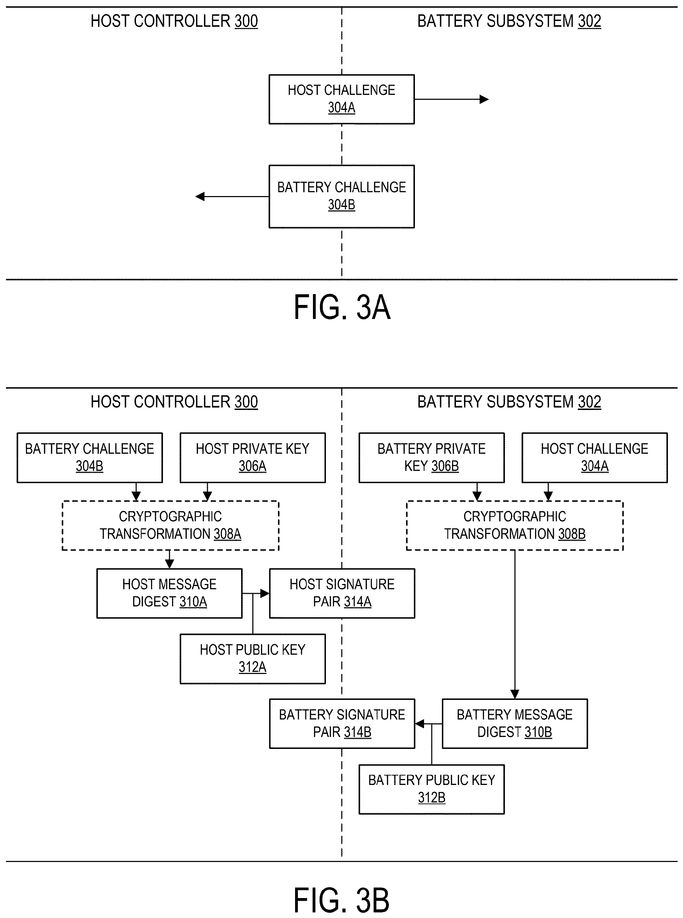

Method 200 outlined in FIG. 2 is schematically illustrated with respect to FIGS. 3A-C. FIG. 3A schematically depicts the exchange of data between a host controller 300 and a battery subsystem 302, which are each components of a larger electronic device. As shown, the host controller transmits a host-side authentication challenge 304A to the battery subsystem. Similarly, the battery subsystem transmits a battery-side authentication challenge 304B to the host controller.

The challenges generated by the host controller and battery subsystem may take any suitable form. In some examples, each challenge may have a total length of 20 bytes, although this is non-limiting. In general, different challenges may be used each time the mutual authentication process takes place. For instance, the challenges may be randomly generated, and/or derived from unique data that changes over time.

Returning briefly to FIG. 2, at 208, the mutual authentication process includes a cryptographic transformation phase. This includes each of the two components applying cryptographic operations to the authentication challenge they received from their counterparts. In one example, both the host controller and battery subsystem use their own corresponding private keys and their respective challenges to compute a message digest using a suitable encryption algorithm. They combine the message digest with their own public keys, and exchange the signed message digests with one another.

This is schematically illustrated with respect to FIG. 3B, depicting operations performed by the host controller 300 and the battery subsystem 302. As shown, the host controller has received the battery-side authentication challenge 304B from the battery controller. The host controller inputs the battery-side authentication challenge 304B and a host-side private key 306 to a cryptographic transformation operation 308A, which outputs a host-side message digest 310A. For instance, the battery-side authentication challenge may be signed with the private encryption key of the host controller to generate the signed host-side message digest. This is transmitted to the battery controller with a host-side public encryption key 312A as a host-side signature pair 314A. The message digests can be used to verify the authenticity of the component that generated and sent the message digest using cryptography, thereby improving the security of the electronic device.

Meanwhile, the battery subsystem receives the host-side authentication challenge 304A from the host controller. The battery controller inputs the host-side authentication challenge 304A and a private encryption key 306B of the battery controller to a battery-side cryptographic transformation 308B, which outputs a battery-side message digest 310B. For instance, the host-side authentication challenge may be signed with the private encryption key of the battery controller to generate the signed battery-side message digest. This is then transmitted to the host controller with a public encryption key 312B of the battery controller as a battery-side signature pair 314B.

One or more of the above operations may take place at the same time. For instance, as the host controller is generating the host-side message digest 310A, the battery subsystem may be generating battery message digest 310B. However, it will be understood that the host-side and battery-side operations discussed above need not take place concurrently, and that any or all of the operations described with respect to FIG. 3B may be performed at different times from one another. For instance, the techniques discussed herein may beneficially enable the mutual authentication process to be performed asynchronously at the two components. This may be particularly beneficial in embedded systems with timing restrictions, enabling each component to complete its share of the authentication process when available.

Any suitable cryptographic algorithm may be used for generating the controller and battery message digests. In the example of FIG. 3B, elliptic curve cryptography (ECC) may be used in generating the host-side and battery-side message digests. As another non-limiting example, Rivest-Shamir-Adleman (RSA) encryption may be used. In general, any suitable cryptographic method may be used that relies on public and private keys to securely exchange data.

The public and private keys for the host controller and the battery subsystem may be provisioned and applied at any suitable time and by any suitable party. In one non-limiting example, the key pairs may be provisioned and installed at the time of manufacture, by the original equipment manufacturer. In this manner, from the time of manufacture, each of the host controller and the battery subsystem can confirm that it is connected to its authorized counterpart, and can detect if an unauthorized replacement is substituted.

Returning briefly to FIG. 2, the mutual authentication process includes a validation phase 210. During the validation phase, both the host controller and the battery subsystem verify each other's signed message digests by using the public key attached to the signed message digest. In other words, the battery subsystem can use the host controller's public key and signed message digest to verify that the host controller is authorized to make configuration changes to and/or read data from the battery subsystem, because the message digest was generated using the private key of an authorized host. The host controller can verify the authenticity of the battery subsystem in a similar manner, and thereby verify that the battery's performance should be nominal for its age and condition.

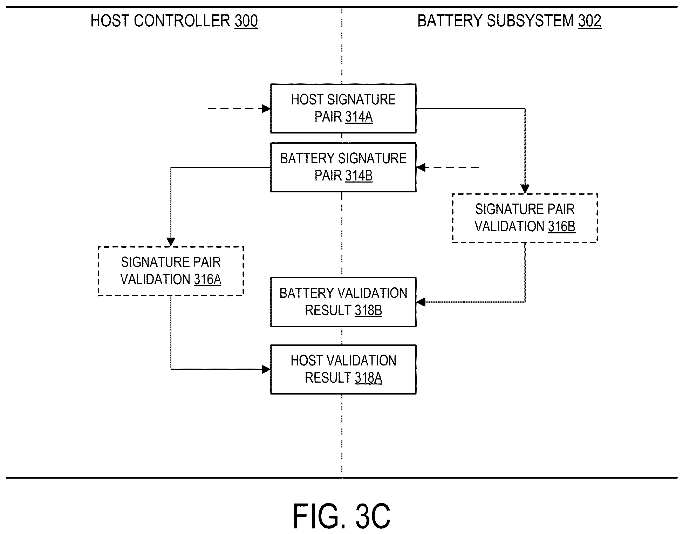

Validation is schematically illustrated with respect to FIG. 3C, again showing exchange of data between the host controller 300 and the battery subsystem 302. As shown, the host controller receives the battery-side signature pair 314B from the battery controller. The battery-side signature pair is then input to a validation process 316A, which outputs a host-side validation result 318A specifying the determined validity state for the battery subsystem (e.g., authentic or inauthentic). Similarly, the battery subsystem receives the host-side signature pair 314A from the host controller. This is input to a validation process 316B, which outputs a battery-side validation result 318B specifying the determined validity state for the host controller. In this manner, each component can cryptographically determine if it is communicating with an authentic counterpart, which beneficially improves the security and safety of the electronic device as discussed above.

Returning briefly to FIG. 2, if both of the validation results agree with one another, then mutual device authentication is established at 212. The devices may then continue operating in a nominal manner. For instance, in response to the host-side validity result indicating that the battery subsystem is authentic, the host controller may trust that the battery will behave as expected, and thereby apply a standard set of configuration settings given the battery's age and condition. Similarly, if the battery-side validity state indicates that the host controller is authentic, the battery controller may determine that the host controller is authorized to apply configuration changes to the battery. Subsequently, the battery may receive and apply configuration changes specified by the host controller - e.g., to change the charging voltage of the battery subsystem.

Furthermore, the use of cryptography to establish an authentication between the two components can beneficially enable encrypted communication between the two components going forward. For instance, subsequent communications between the host controller and the battery subsystem via a communications interface (e.g., a data bus) may be encrypted. This may prevent the use of bus sniffing to determine when the host controller is changing the voltage of the battery subsystem, and/or performing other data reads or writes.

Otherwise, if one of the two components determines that its counterpart is not authentic, then it may change one or more aspects of its future behavior. For instance, in one scenario, the host-side validity result may indicate that the battery subsystem is inauthentic. In response, the host controller may apply an alternate configuration profile to the battery subsystem. This may include, for instance, reducing the battery's charging voltage, and/or changing other aspects of the battery's behavior (e.g., disabling a "fast charging" mode). As discussed above, the use of high charging voltages with old or degraded battery cells can produce safety hazards. Thus, the host controller may change the battery's configuration to use more conservative settings, as there is less trust that the battery hardware is safe. This can beneficially improve the safety of the computing device by reducing the risk of hazardous conditions (such as thermal runaway) even when inauthentic battery components are used. In some examples, the host controller may output a notification to the user that a potentially fake or faulty battery is detected. However, the host controller may continue drawing power from the battery in some scenarios. This may beneficially preserve compatibility with 3^{rd} party hardware, while mitigating potential safety issues that can arise when such hardware is used.

Similarly, if the battery-side validity state indicates that the host controller is inauthentic, then the battery subsystem may limit the ability of the host controller to write and/or read data. For instance, the battery subsystem may reject subsequent configuration changes requested by the host controller, and prevent attempts by the host controller to overwrite data stored by the battery subsystem.

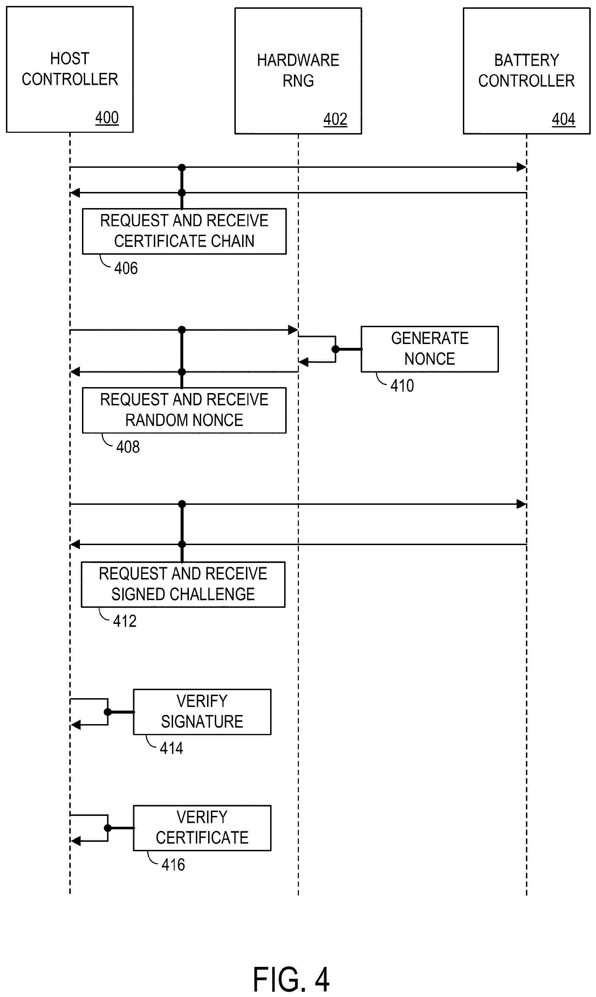

FIG. 4 illustrates a non-limiting example process for cryptographic authentication, which may in some examples be implemented as part of the mutual device authentication techniques described herein. For instance, the steps shown in FIG. 4 may be implemented as part of an ECC algorithm, and/or other suitable cryptographic algorithm used in mutual device authentication. FIG. 4 is described from the perspective of the host controller. However, it will be understood that similar operations may in some cases be performed by the battery controller.

Specifically, FIG. 4 schematically illustrates exchange of data between a host controller 400, a hardware random number generator (RNG) component of an electronic device, and a battery controller 404 of the electronic device. The hardware RNG component takes the form of any suitable device or combination of devices useable to generate random or pseudo-random numbers. In some examples, these may be generated using physical processes rather than deterministic algorithms, such as by sampling electronic noise or clock jitter. In some examples, any or all of the host controller, hardware RNG component, and battery controller may be implemented via the logic subsystem 502 and/or storage subsystem 504 of computing system 500 described below with respect to FIG. 5.

At 406, the host controller requests and receives a certificate chain from the battery controller. In other words, the host controller retrieves the public portions of the public/private asymmetric keypairs protected by the silicon and firmware inside the battery controller. In some examples, these keys may be provisioned at the original equipment manufacturer (OEM) factory. In some examples, the key chains may resemble an inverted pyramid with the largest Hash/Key-size/Validity period on top, and children being equal in size or smaller than their parent in terms of Hash/Key-size/Validity periods. The root key may be self-signed, meaning its own private key was used to sign its associated public key and/or other assorted data. The last key in the chain may be referred to as the "end-entity" or "leaf signer" key, and may in some cases be refreshed periodically depending on the strength of the hashing/key-sizes associated with that specific key-pair.

In some examples, this information may be stored by the battery controller as a continuous block of memory that specifies the stacked keys. Use of a continuous block is not required, although may beneficially provide efficiency and ease-of-implementation compared to scenarios where non-continuous blocks are used.

At 408, the host controller requests and receives a random nonce value from the hardware RNG component. At 410, the nonce itself is generated by the hardware RNG component and returned to the host controller. The nonce value may in some cases be used as the authentication challenge for the entity that generated it (e.g., the host-side authentication challenge in this case). A nonce refers to a "Number only used Once," and therefore may be unique each time a challenge is generated. To improve security, in some cases the key-material buffers may be zeroed out after use to prevent inspection by a malicious party.

At 412, the host controller requests and receives a signed challenge from the battery controller. In other words, the host controller provides its nonce value (e.g., the host-side authentication challenge), and instructs the battery controller to sign the challenge using its leaf signer. After signing, the output of the signature operation is returned to the host controller.

At 414, the host controller verifies the signed challenge. This takes the public key of the battery controller received earlier, the nonce previously generated by the host, and the signed nonce returned by the battery controller, and verifies that the nonce was signed with the authentic private key.

At 416, the host controller performs a certificate verification process with respect to two parameters, a parent certificate and a child certificate. This may be done to verify that the parent is the original issuer of the child certificate - e.g., to verify that the device's factory certificate authority (factory CA) signed the device's leaf key. The parent and child public keys may in some cases be formatted using the X.509 standard. In this manner, the certificate verification process may be used to verify that the signature inside of the child's X.509 certificate was indeed signed using the private key of the parent X.509 certificate. In some cases, this process may be used twice. First, to verify that the device's factory CA signed the leaf key, and second to verify that the factory CA itself was signed by the trust anchor CA or root key.

The methods and processes described herein may be tied to a computing system of one or more computing devices. In particular, such methods and processes may be implemented as an executable computer-application program, a network-accessible computing service, an application-programming interface (API), a library, or a combination of the above and/or other compute resources.

FIG. 5 schematically shows a simplified representation of a computing system 500 configured to provide any to all of the compute functionality described herein. Computing system 500 may take the form of one or more personal computers, network-accessible server computers, tablet computers, home-entertainment computers, gaming devices, mobile computing devices, mobile communication devices (e.g., smart phone), virtual/augmented/mixed reality computing devices, wearable computing devices, Internet of Things (IoT) devices, embedded computing devices, and/or other computing devices.

Computing system 500 includes a logic subsystem 502 and a storage subsystem 504. Computing system 500 may optionally include a display subsystem 506, input subsystem 508, communication subsystem 510, and/or other subsystems not shown in FIG. 5.

Logic subsystem 502 includes one or more physical devices configured to execute instructions. For example, the logic subsystem may be configured to execute instructions that are part of one or more applications, services, or other logical constructs. The logic subsystem may include one or more hardware processors configured to execute software instructions. Additionally, or alternatively, the logic subsystem may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem optionally may be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 504 includes one or more physical devices configured to temporarily and/or permanently hold computer information such as data and instructions executable by the logic subsystem. When the storage subsystem includes two or more devices, the devices may be collocated and/or remotely located. Storage subsystem 504 may include volatile, nonvolatile, dynamic, static, read/write, read-only, random-access, sequential-access, location-addressable, file-addressable, and/or content-addressable devices. Storage subsystem 504 may include removable and/or built-in devices. When the logic subsystem executes instructions, the state of storage subsystem 504 may be transformed - e.g., to hold different data.

Aspects of logic subsystem 502 and storage subsystem 504 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

When included, display subsystem 506 may be used to present a visual representation of data held by storage subsystem 504. This visual representation may take the form of a graphical user interface (GUI). Display subsystem 506 may include one or more display devices utilizing virtually any type of technology. In some implementations, display subsystem may include one or more virtual-, augmented-, or mixed reality displays.

When included, input subsystem 508 may comprise or interface with one or more input devices. An input device may include a sensor device or a user input device. Examples of user input devices include a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 510 may be configured to communicatively couple computing system 500 with one or more other computing devices. Communication subsystem 510 may include wired and/or wireless communication devices compatible with one or more different communication protocols. The communication subsystem may be configured for communication via personal-, local- and/or wide-area networks.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

In an example, a method for mutual authentication between a host controller and a battery subsystem of an electronic device comprises: at a battery controller of the battery subsystem, generating a battery-side authentication challenge, and transmitting the battery-side authentication challenge to the host controller; receiving a host-side authentication challenge from the host controller; signing the host-side authentication challenge with a private encryption key of the battery controller to generate a battery-side message digest; transmitting the battery-side message digest and a public encryption key of the battery controller to the host controller as a battery-side signature pair; receiving a host-side signature pair from the host controller; and based at least in part on the host-side signature pair, outputting a battery-side validation result that specifies a battery-side validity state for the host controller. In this example or any other example, the battery-side validity state indicates that the host controller is an authentic host controller that is authorized to apply configuration changes to the battery subsystem. In this example or any other example, the method further comprises, at the battery controller, receiving a configuration change specified by the host controller, and applying the configuration change to the battery subsystem. In this example or any other example, the configuration change includes changing a charging voltage of the battery subsystem. In this example or any other example, subsequent communications between the host controller and the battery subsystem over a data bus are encrypted. In this example or any other example, the battery-side validity state indicates that the host controller is an inauthentic host controller that is not authorized to apply configuration changes to the battery subsystem. In this example or any other example, the method further comprises, at the battery controller, rejecting a subsequent configuration change received from the host controller in response to determining that the host controller is inauthentic. In this example or any other example, the method further comprises, at a subsequent time, re-establishing mutual authentication between the host controller and the battery subsystem after detecting a reauthentication condition. In this example or any other example, an Elliptic-Curve Cryptography (ECC) algorithm is used in generating the battery-side message digest. In this example or any other example, the method further comprises, at the host controller, generating the host-side authentication challenge, and transmitting the host-side authentication challenge to the battery controller; receiving the battery-side authentication challenge from the battery controller; signing the battery-side authentication challenge with a private encryption key of the host controller to generate a host-side message digest; transmitting the host-side message digest and a public encryption key of the host controller to the battery controller as the host-side signature pair; receiving the battery-side signature pair from the battery controller; and based at least in part on the battery-side signature pair, outputting a host-side validation result that specifies a host-side validity state for the battery subsystem. In this example or any other example, the host-side validity state indicates that the battery subsystem is an inauthentic battery subsystem. In this example or any other example, the method further comprises applying an alternate configuration profile to the battery subsystem in response to determining that the battery subsystem is inauthentic.

In an example, an electronic device comprises: a host controller; and a battery subsystem including a battery controller and a plurality of battery cells, wherein the battery controller is configured to: generate a battery-side authentication challenge, and transmit the battery-side authentication challenge to the host controller; receive a host-side authentication challenge from the host controller; sign the host-side authentication challenge with a private encryption key of the battery controller to generate a battery-side message digest; transmit the battery-side message digest and a public encryption key of the battery controller to the host controller as a battery-side signature pair; receive a host-side signature pair from the host controller; and based at least in part on the host-side signature pair, output a battery-side validation result that specifies a battery-side validity state for the host controller. In this example or any other example, the battery-side validity state indicates that the host controller is an authentic host controller that is authorized to apply configuration changes to the battery subsystem. In this example or any other example, the battery-side validity state indicates that the host controller is an inauthentic host controller that is not authorized to apply configuration changes to the battery subsystem. In this example or any other example, the battery controller is further configured to reject a subsequent configuration change received from the host controller in response to determining that the host controller is inauthentic. In this example or any other example, an Elliptic-Curve Cryptography (ECC) algorithm is used in generating the battery-side message digest. In this example or any other example, the host controller is configured to: generate the host-side authentication challenge, and transmit the host-side authentication challenge to the battery controller; receive the battery-side authentication challenge from the battery controller; sign the battery-side authentication challenge with a private encryption key of the host controller to generate a host-side message digest; transmit the host-side message digest and a public encryption key of the host controller to the battery controller as the host-side signature pair; receive the battery-side signature pair from the battery controller; and based at least in part on the battery-side signature pair, output a host-side validation result that specifies a host-side validity state for the battery subsystem. In this example or any other example, the host-side validity state indicates that the battery subsystem is inauthentic, and the host controller is further configured to apply an alternate configuration profile to the battery subsystem in response to determining that the battery subsystem is inauthentic.

In an example, a method for mutual authentication between a host controller and a battery subsystem of an electronic device comprises: at the host controller, generating a host-side authentication challenge, and transmitting the host-side authentication challenge to a battery controller of the battery subsystem; receiving a battery-side authentication challenge from the battery controller; signing the battery-side authentication challenge with a private encryption key of the host controller to generate a host-side message digest; transmitting the host-side message digest and a public encryption key of the host controller to the battery controller as a host-side signature pair; receiving a battery-side signature pair from the battery controller; and based at least in part on the battery-side signature pair, outputting a host-side validation result that specifies a host-side validity state for the battery controller.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method for mutual authentication between a host controller and a battery subsystem of an electronic device, the method comprising:
at a battery controller of the battery subsystem, generating a battery-side authentication challenge, and transmitting the battery-side authentication challenge to the host controller;
receiving a host-side authentication challenge from the host controller;
signing the host-side authentication challenge with a private encryption key of the battery controller to generate a battery-side message digest;
transmitting the battery-side message digest and a public encryption key of the battery controller to the host controller as a battery-side signature pair;
receiving a host-side signature pair from the host controller; and
based at least in part on the host-side signature pair, outputting a battery-side validation result that specifies a battery-side validity state for the host controller.

2. The method of claim 1, wherein the battery-side validity state indicates that the host controller is an authentic host controller that is authorized to apply configuration changes to the battery subsystem.

3. The method of claim 2, further comprising, at the battery controller, receiving a configuration change specified by the host controller, and applying the configuration change to the battery subsystem, and optionally further wherein the configuration change includes changing a charging voltage of the battery subsystem.

4. The method of claim 1, wherein subsequent communications between the host controller and the battery subsystem over a data bus are encrypted.

5. The method of claim 1, further comprising, at a subsequent time, re-establishing mutual authentication between the host controller and the battery subsystem after detecting a reauthentication condition.

6. The method of claim 1, further comprising:
at the host controller, generating the host-side authentication challenge, and transmitting the host-side authentication challenge to the battery controller;
receiving the battery-side authentication challenge from the battery controller;
signing the battery-side authentication challenge with a private encryption key of the host controller to generate a host-side message digest;
transmitting the host-side message digest and a public encryption key of the host controller to the battery controller as the host-side signature pair;
receiving the battery-side signature pair from the battery controller; and
based at least in part on the battery-side signature pair, outputting a host-side validation result that specifies a host-side validity state for the battery subsystem.

7. The method of claim 6, wherein the host-side validity state indicates that the battery subsystem is an inauthentic battery subsystem, and optionally further comprising applying an alternate configuration profile to the battery subsystem in response to determining that the battery subsystem is inauthentic.

8. An electronic device, comprising:
a host controller; and
a battery subsystem including a battery controller and a plurality of battery cells, wherein the battery controller is configured to:
generate a battery-side authentication challenge, and transmit the battery-side authentication challenge to the host controller;
receive a host-side authentication challenge from the host controller;
sign the host-side authentication challenge with a private encryption key of the battery controller to generate a battery-side message digest;
transmit the battery-side message digest and a public encryption key of the battery controller to the host controller as a battery-side signature pair;
receive a host-side signature pair from the host controller; and
based at least in part on the host-side signature pair, output a battery-side validation result that specifies a battery-side validity state for the host controller.

9. The electronic device of claim 8, wherein the battery-side validity state indicates that the host controller is an authentic host controller that is authorized to apply configuration changes to the battery subsystem.

10. The method of claim 1 or the electronic device of claim 8, wherein the battery-side validity state indicates that the host controller is an inauthentic host controller that is not authorized to apply configuration changes to the battery subsystem.

11. The method of claim 10 or the electronic device of claim 10, wherein the battery controller is further configured to reject a subsequent configuration change received from the host controller in response to determining that the host controller is inauthentic.

12. The method of claim 1 or the electronic device of claim 8, wherein an Elliptic-Curve Cryptography (ECC) algorithm is used in generating the battery-side message digest.

13. The electronic device of claim 8, wherein the host controller is configured to:
generate the host-side authentication challenge, and transmit the host-side authentication challenge to the battery controller;
receive the battery-side authentication challenge from the battery controller;
sign the battery-side authentication challenge with a private encryption key of the host controller to generate a host-side message digest;
transmit the host-side message digest and a public encryption key of the host controller to the battery controller as the host-side signature pair;
receive the battery-side signature pair from the battery controller; and
based at least in part on the battery-side signature pair, output a host-side validation result that specifies a host-side validity state for the battery subsystem.

14. The electronic device of claim 13, wherein the host-side validity state indicates that the battery subsystem is inauthentic, and wherein the host controller is further configured to apply an alternate configuration profile to the battery subsystem in response to determining that the battery subsystem is inauthentic.

15. A method for mutual authentication between a host controller and a battery subsystem of an electronic device, the method comprising:
at the host controller, generating a host-side authentication challenge, and transmitting the host-side authentication challenge to a battery controller of the battery subsystem;
receiving a battery-side authentication challenge from the battery controller;
signing the battery-side authentication challenge with a private encryption key of the host controller to generate a host-side message digest;
transmitting the host-side message digest and a public encryption key of the host controller to the battery controller as a host-side signature pair;
receiving a battery-side signature pair from the battery controller; and
based at least in part on the battery-side signature pair, outputting a host-side validation result that specifies a host-side validity state for the battery controller.
